# EUROPEAN PATENT SPECIFICATION

(11) **EP 4 069 974 B1**
(45) Date of publication and mention of the grant of the patent: **04.02.2026**
(21) Application number: 20824978.9
(22) Date of filing: 02.12.2020
(51) Int. Cl.: F03G 7/06, G02B 27/64, G03B 5/02

(54) **ACTUATOR ASSEMBLY**
AKTUATORANORDNUNG
ENSEMBLE ACTIONNEUR

(30) Priority: 02.12.2019 GB 201917543
(43) Date of publication of application: 12.10.2022
(73) Proprietor: Cambridge Mechatronics Limited, Cambridge CB4 0WG (GB)
(72) Inventor: BROWN, Andrew Benjamin Simpson, Cambridge Cambridgeshire CB4 1YG (GB); EDDINGTON, Robin, Cambridge Cambridgeshire CB4 1YG (GB); PANTELIDIS, Konstantinos, Cambridge Cambridgeshire CB4 1YG (GB); POLENTA, Valerio, Cambridge Cambridgeshire CB4 1YG (GB); SOUTH, Adam, Cambridge Cambridgeshire CB4 1YG (GB); HOWARTH, James, Cambridge Cambridgeshire CB4 1YG (GB)
(74) Representative: Cambridge Mechatronics Limited
(86) International application number: PCT/GB2020/053094
(87) International publication number: WO 2021/111131

(56) References cited:
- WO-A1-2013/121225
- WO-A1-2018/206768
- WO-A2-2013/153400
- US-A1- 2018 171 991

## Description

### Field

The present application relates to an actuator assembly, particularly an actuator assembly comprising a plurality of lengths of shape-memory alloy (SMA) wire.

### Background

Such an actuator assembly may be used, for example, in a camera to move a lens assembly in directions perpendicular to the optical axis so as to provide optical image stabilization (OIS). Where such a camera is to be incorporated into a portable electronic device such as a mobile telephone, miniaturization can be important.

WO 2019/086855 A1 describes a camera with an actuator assembly including a support platform, a moving platform that supports a lens assembly, SMA wires connected to the support platform and the moving platform, bearings to bear the moving platform on the support platform, and two arms extending between the support platform and the moving platform.

### Summary

According to a first aspect of the present invention, there is provided a shape memory alloy actuator assembly according to claim 1.

The SMA wire may have any shape that is suitable for the purposes described herein. The SMA wire is elongate and may have a round cross section or any other shape cross section. The cross section may vary along the length of the SMA wire. The SMA wire may be pliant or, in other words, flexible. In some examples, when connected in a straight line between two elements, the SMA wire can apply only a tensile force which urges the two elements together. In other examples, the SMA wire may be bent around an element and can apply a force to the element as the SMA wire tends to straighten under tension. The SMA wire may or may not include material(s) and/or component(s) that are not SMA. For example, the SMA wire may comprise a core of SMA and a coating of non-SMA material. Unless the context requires otherwise, the term 'SMA wire' may refer to any configuration of SMA wire acting as a single actuating element which, for example, can be individually controlled to produce a force on an element. For example, the SMA wire may comprise two or more portions of SMA wire that are arranged mechanically in parallel and/or in series. In some arrangements, the SMA wire may be part of a larger piece of SMA wire. Such a larger piece of SMA wire might comprise two or more parts that are individually controllable, thereby forming two or more SMA wires.

The SMA wires may be formed of any suitable shape memory alloy material, typically a nickel-titanium alloy (e.g. Nitinol), possibly also containing tertiary components such as copper. The SMA wires may have any cross-sectional profile and diameter suitable for the application. For example, the SMA wires may have a cross section diameter of 25µm, or 30µm, or 35µm, capable of generating a maximum force of between 120mN to 400mN whilst maintaining the strain in the SMA wire within safe limits (e.g. 2-3% reduction in length over original length). Increasing the diameter of each SMA wire from 25µm to 35µm approximately doubles the cross-sectional area of the SMA wire and thus approximately doubles the force provided by each SMA wire.

In some embodiments, the SMA actuator assembly comprises a support and plural movable parts (e.g. one or more intermediate movable stages and a final movable stage) in a stacked (and/or nested) configuration. The final movable stage may be considered to be the moveable part that delivers an overall stroke that is additive from all other stages. More specifically, the SMA actuator assembly may comprise multiple stacked SMA actuator assemblies according to the first aspect. That is, the one or more stacked movable stages may each be moveable, along the first plane, relatively to the support or an intermediate stage, adjacent to the respective moveable stage.

In embodiments where the SMA actuator assembly consists of only one intermediate stage and a final stage, the intermediate stage may be moveable relative to the support and may itself form a support for the final stage. For example, in such embodiments, the final stage may move with the intermediate stage and relative to the support structure (e.g. when only the intermediate stage is moved), or it may move only relative to the intermediate stage (e.g. when the intermediate stage maintains its position relative to the support). The intermediate stage may move relative to both the final stage and the support, preferably in the same direction, to achieve the greatest stroke possible in the said direction.

By the contraction of the corresponding SMA wires, each stage may move in a single axis or at least two non-parallel directions. That is, in some embodiments where each stage moves only in a discrete axis, the X and Y movements may be controlled independently by corresponding stages.

Optionally, the plural units of shape memory alloy wire comprise two or four units of shape memory alloy wire. Optionally, the plural units of shape memory alloy wire are paired units. For example, one of the units in a pair may be arranged in an opposite sense to the other unit in the pair. Advantageously, such an arrangement may reduce, or eliminate net torque during operation.

The first and second lengths are coupled to each other by way of a coupling part that is configured to move relative to the support and/or to the moveable element so as to provide the said coupling between the first and second lengths. The first and second lengths may be attached to the coupling part by any suitable means, such as crimps and adhesives. Alternatively, the first and second lengths may be slidable on a surface of the coupling part. That is, the first and second lengths of the shape memory alloy wire may be retained on the coupling part by the tension in the shape memory alloy wire.

At least one of the coupling parts may be connected to the support. At least one of the coupling parts may be connected to the movable part. In some embodiments, some of the coupling parts may be connected to support whilst the other coupling parts may be connected to the movable part.

At least one of the coupling parts may be comprised in or attached to a flexure that flexes in the first plane so as to provide the said coupling between the first and second lengths. Advantageously, such an arrangement may eliminate any friction that may otherwise exist in known actuators where shape memory alloy wires are allowed to slide over protrusions or pulleys.

The flexure may comprise a first part that is in tension when the flexure is flexing in the first plane and a second part that is in compression when the flexure is flexing in the first plane. The second part of the flexure may have a higher stiffness than the first part of the flexure. The first and second parts of the flexure may lie in the same plane. The second part may be a rigid frame. For example, the first part and second part of the flexure may extend at least partially in parallel and joined together at one end of the flexure. Upon actuation, the first part may be put in tension and thus causing it to bend, thereby compressing the second part of the flexure. Such an arrangement may advantageously allow the flexure to rotate upon itself, thereby reducing the space required for accommodating the flexure. That is, the second flexure part rotates around the first flexure part for effecting movement in the coupling part.

The flexure may comprise a part that is generally in compression when the flexure is flexing in the first plane. The part may have a higher compliance in the first plane than in a direction perpendicular to the first plane. The part may have a cross section that is elongate in a direction perpendicular to the first plane.

The assembly may comprise at least one stack of two flexures, wherein the flexures in the stack are spaced from each other in a direction perpendicular to the first plane. More specifically, the flexures are stacked in the direction in a direction perpendicular to the first plane. Advantageously, such an arrangement may reduce the footprint of the flexures and coupling parts, and it may allow other components to be placed within a defined space.

Optionally, the assembly may further comprise a spacer sandwiched between the coupling parts of the corresponding flexures in each stack, wherein the spacer is configured to prevent excessive (e.g. restrict) flexure movement in a direction perpendicular to the first plane. The spacer may abut one or both of the coupling parts, e.g. the coupling parts may slide on the surface of the spacer. Such an arrangement may allow a guided lateral movement in the coupling parts.

Alternatively, a gap may be presented between the spacer and the coupling parts. That is, in such an arrangement, the spacer may not guide the movement of coupling parts, instead it may serve as an end stop in case of abrupt movements. For example, in the event of a sudden drop, the coupling parts may be prevented from colliding with each other.

Optionally, the spacer may additionally comprise an end stop for constraining excessive flexure movement in the first plane (e.g. movement plane). That is, the spacer may extend in a part of a movement path of the coupling parts and/or first or second flexure parts, and thereby define the limit movement in the coupling parts, and/or minimise damage in case of abrupt movements.

Alternatively, the flexures do not overlap when viewed in a direction perpendicular to the first plane. That is, the flexures may not be stacked. Instead, the flexures may evenly distribute substantially in the first plane, around a centre of the support and/or the movable part. In some embodiments, at least portions of the flexures may extend in the same plane. Advantageously, such an arrangement may reduce the height of the assembly, resulting in a thinner, more compacted, actuator.

Optionally, the flexure comprises at least two portions arranged perpendicularly to each other comprising a first, planar portion configured to flex in the first plane and the second portion configured to resist deformation in the first plane. More specifically, the first planar portion may be an elongate member having its smallest dimension extending in the first plane. Advantageously, the stiffness of the flexure may be specified by varying the thickness of the first planar portion.

Optionally, the second portion is a planar portion. Optionally, the second planar portion may provide an attaching surface for attaching to the support or the movable part.

Optionally, the first planar portion and the second portion are integrally formed from a single sheet of metal. For example, the flexure may be formed by cutting or stamping the sheet of metal to shape, before bending along a predetermined line to form the perpendicularly arranged portions. Advantageously, such an arrangement may allow for a simplified manufacturing process.

Alternatively, the flexure may form by welding or adhering discrete first planar portion and the second portion together.

Optionally, the first flexure part comprises a void, or a thinned section, or a thickened section for modifying the stiffness of the first flexure part. The first flexure part may comprise one or more flexure members with voids, thinned sections, or thickened sections adjacent to each flexure member. The first flexure part may comprise one or more voids, thinned sections, or thickened sections to provide different localised stiffnesses. The void, thinned section, or thickened section may be formed by etching or stamping. Advantageously, the required stiffness of the flexure may be achieved by varying the size of the void.

Optionally, the coupling part comprises a groove substantially extending in the first plane for accommodating the shape memory alloy wire. Advantageously, the groove may help to retain the shape memory alloy wire on the surface of the coupling part.

Optionally, the coupling part comprises a wire capture part for accommodating the shape memory alloy wire, the wire capture part comprising a groove substantially extending in the first plane. Optionally, the wire capture part comprises multiple radii when viewed in a direction perpendicular to the first plane, the wire capture part having the largest radii towards its peripheries. More specifically, along the length of the groove, the curvature may be at its greatest towards the midpoint and gradually reduces towards both ends of the groove. Advantageously, such an arrangement may, during actuation, reduce the degree of bending in portions of shape memory alloy wire that are adjacent to the edges of the coupling part.

Optionally, the wire capture part is formed from two stacked parts, wherein the groove is defined at the interface between the two stacked parts. Alternatively, the groove may by etching the surface of the coupling part.

Optionally, the one or each of the stacked parts comprises an outwardly extending tab, wherein the tab is configured to connect with corresponding tab of a pre-assembled frame, wherein the said connection is severable during an assembly process. The tab may be severed by means of mechanical or laser cutting. In some embodiments, the pre-assembled frame may comprise plural coupling parts (and flexures), wherein the use of the pre-assembled frame may allow efficient and accurate alignment of the coupling parts during the assembly process. Advantageously, the provision of an outwardly extending tab may reduce physical and thermal disruption to the shape memory alloy wire when the connection is severed during the cutting process.

Optionally, the shape memory alloy wire is adhered to the coupling part at an adhesion point away from the peripheries of the wire capture part. More specifically, the shape memory alloy wire is adhered to the coupling part at a position towards the midpoint along the length of the groove. Advantageously, by allowing the shape memory alloy wire to move freely towards the edges of the groove, such an arrangement may reduce the likelihood of forming sharp bends in the shape memory alloy wire during actuation, thereby it may improve reliability, as well as the performance of the actuator.

Optionally, the wire capture part comprises at least one indentation adjacent to the adhesion point for containing excessive adhesive. That is, a receiving portion may be provided in the groove for receiving and containing overflowed adhesive during the assembly process.

The movable part may have a generally quadrilateral shape; each of the plural units may comprise a said first length and a said second length; and each of the first and second lengths may be arranged along an outer edge of the movable part and may partially overlap with one other one of the first and second lengths. Each of the first lengths may be connected via a first connector to the support and each of the second lengths may be connected via a second connector to the movable part; the first and second connectors may be located at a first pair of diagonally-opposite corners of the movable part; and the first and second lengths may be coupled to each other at a second, different pair of diagonally-opposite corners of the movable part.

Alternatively, each of the first lengths is connected via a first connector to the support and each of the second lengths is connected via a second connector to the movable part; the first and second connectors are located at diagonally-opposite corners of the movable part; and the first and second lengths are coupled to each other at different pair of diagonally-opposite corners of the movable part.

The assembly may comprise a stack of two flexures located at each of the second pair of corners.

Each of the four units may consist of a single shape memory alloy wire.

Each of the four units may consists of a first shape memory alloy wire corresponding to the first length, and a second shape memory alloy wire corresponding to the second length.

At least one of the coupling parts may be connected to a lever.

Optionally, at least one of the coupling parts does not move translationally (e.g. is fixed or merely rotates).

According to a second aspect of the present invention, there is provided a method of producing the assembly according to the first aspect, comprising:
providing a sub-assembly, the said sub-assembly comprising a sub-assembly frame connected to the plural couplings;
aligning and attaching the couplings to their predetermined positions on the support and/or the moveable part;
severing the connection between the sub-assembly frame and the couplings;
removing the sub-assembly frame to form the assembly.

### Brief Description of the Drawings

Certain embodiments of the present invention will now be described, by way of example only, with reference to the accompanying drawings, in which:
Figure 1 is a schematic cross-sectional view of a camera incorporating an SMA actuator assembly;
Figure 2 is a top plan view of the SMA actuator assembly illustrated in Figure 1;
Figure 3 is a top, angled view of the SMA actuator assembly illustrated in Figure 1;
Figure 4 is an exploded perspective view the SMA actuator assembly illustrated in Figure 1 expanded along an optical axis O;
Figures 5A and 5B are top plan views of the SMA wires of the actuator assembly illustrated in Figure 1 and elements connected to the SMA wires;
Figure 6A and 6B are, respectively, a top plan view and a top, angled view of a lower one of the couplings included in the SMA actuator assembly illustrated in Figure 1;
Figure 7 is a top, angled view of a stack of two of the couplings included in the SMA actuator assembly illustrated in Figure 1;
Figures 8A and 8B are respectively a perspective view and a side plan view of a stack of two of the couplings according to a second embodiment of the present invention;
Figures 9 is a perspective view of one of the couplings according to a third embodiment of the present invention;
Figures 10A, 10B and 10C are respectively a plan view, a perspective view and a side section view of a stack of two of the couplings according to a fourth embodiment of the present invention;
Figures 10D and 10E are respectively enlarged plan views of a wire capture part and a lower part of the wire capture part of the coupling as shown in Figures 10A-10C;
Figures 10F and 10G are respectively an enlarged plan view and an enlarged perspective view of a sub-assembly frame connected to the wire capture part of the coupling as shown in Figures 10A-E;
Figures 10H, 10I and 10J are respectively a perspective view, an enlarged side sectional view and an enlarged plan view of the actuator assembly featured in Figures 10A-10G;
Figures 11A and 11B are respectively perspective views of a coupling according to a fifth embodiment and a sixth embodiment of the present invention;
Figure 12 is a perspective view of a coupling according to a seventh embodiment of the present invention;
Figures 13A and 13B are respectively a perspective view and a side section view of a coupling according to an eighth embodiment of the present invention;
Figures 14A and 14B are respectively a plan view and an exploded perspective view of an SMA actuator according to a ninth embodiment of the present invention; and
Figures 14C and 14D are respectively perspective view of two adjacent corners of the SMA actuator of Figures 14A and 14B.

### Detailed Description

### Camera

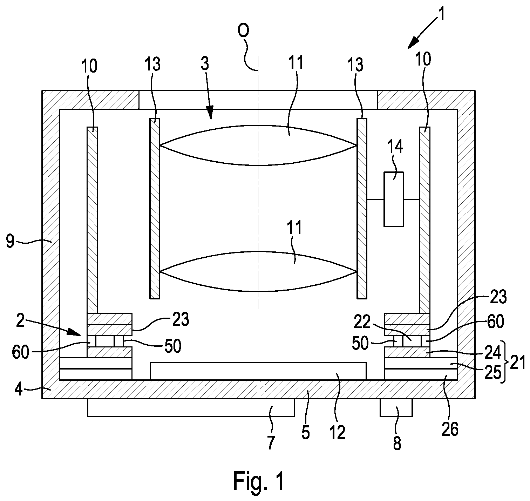

Referring to Figure 1, a camera 1 incorporating an SMA actuator assembly 2 (herein also referred to as an "SMA actuator" or simply an "actuator") is shown.

The camera 1 includes a lens assembly 3 suspended on a support structure 4 by an SMA actuator assembly 2 that supports the lens assembly 3 in a manner allowing movement of the lens assembly 3 relative to the support structure 4 in directions perpendicular to the optical axis O.

The support structure 4 includes a base 5. An image sensor 12 is mounted on a front side of the base 5. On a rear side of the base 5, there is mounted an integrated circuit (IC) 7 in which a control circuit is implemented, and also a gyroscope sensor 8. The support structure 4 also includes a can 9 which protrudes forwardly from the base 5 to encase and protect the other components of the camera 1.

The lens assembly 3 includes a lens carriage 10 in the form of a cylindrical body supporting two lenses 11 arranged along the optical axis O. In general, any number of one or more lenses 11 may be included. Preferably, each lens 11 has a diameter of up to about 20 mm. The camera 1 can therefore be referred to as a miniature camera.

The lens assembly 3 is arranged to focus an image onto the image sensor 12. The image sensor 12 captures the image and may be of any suitable type, for example, a charge-coupled device (CCD) or a complementary metal-oxide-semiconductor (CMOS) device.

The lenses 11 are supported on the lens carriage 10 such that the lenses 11 are movable along the optical axis O relative to the lens carriage 10, for example to provide focussing or zoom. In particular, the lenses 11 are fixed to a lens holder 13 which is movable along the optical axis O relative to the lens carriage 10. Although all the lenses 11 are fixed to the lens holder 13 in this example, in general, one or more of the lenses 11 may be fixed to the lens carriage 10 and so not movable along the optical axis O relative to the lens carriage 10, leaving at least one of the lenses 11 fixed to the lens holder 13.

An axial actuator arrangement 14 provided between the lens carriage 10 and the lens holder 13 is arranged to drive movement of the lens holder 10 and the lenses 11 along the optical axis O relative to the lens carriage 10. The axial actuator arrangement 14 may be of any suitable type, for example, a voice coil motor (VCM) or an arrangement of SMA wires.

In operation, the lens assembly 3 is moved orthogonally to the optical axis O, relative to the image sensor 12, with the effect that the image on the image sensor 12 is moved. This is used to provide optical image stabilization (OIS), compensating for movement of the camera 1, which may be caused by hand shake etc.

### Actuator assembly

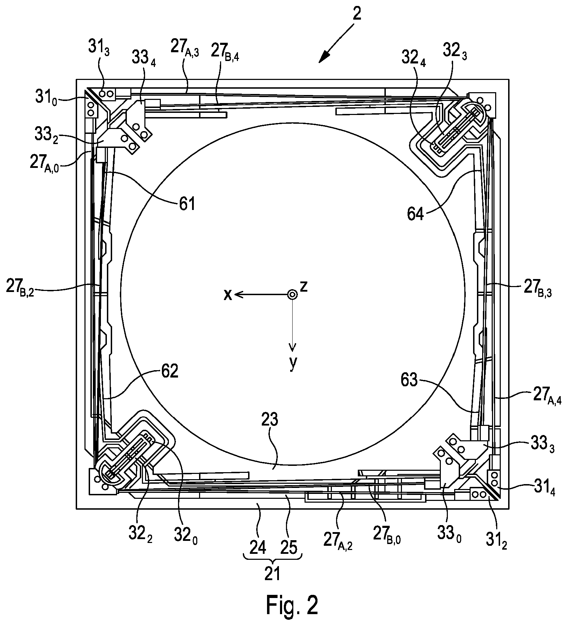

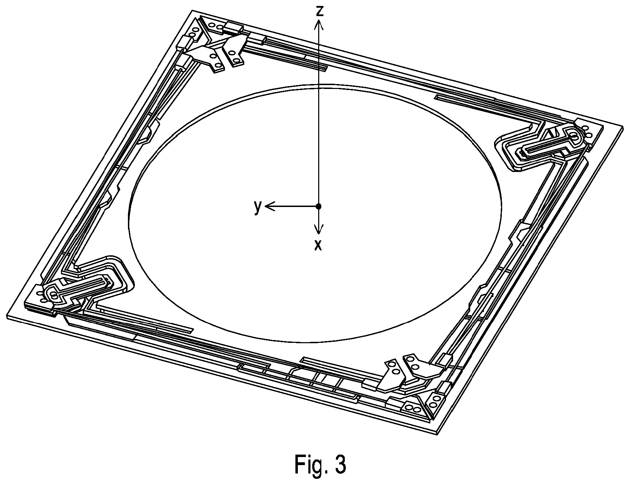

Referring to Figures 2 to 7, the SMA actuator assembly 2 will now be described in more detail.

Referring in particular to Figures 2 to 4, the actuator assembly 2 includes a support platform 21 and a moving platform 23.

Each of the support platform 21 and the moving platform 23 generally take the form of a flat, thin annulus with a rectangular outer edge (or "peripheral edge") and a circular inner edge. The outer edge of the moving platform 23 lies inside the outer edge of the support platform 21, but the inner edges of the platforms 21, 23 are generally co-extensive.

The moving platform 23 supports the lens assembly 3 (Figure 1) and is connected to the lens carriage 10 (Figure 1).

The support platform 21 is formed from two separate components, namely a support component 24 and a conductive component 25, which are affixed to each another.

The actuator assembly 2 may include a base component 26, which is affixed to the support platform 21, and to the base 5 (Figure 1) of the camera 1 (Figure 1).

Each of the moving platform 23, the support component 24 and the conductive component 25 may take the form of a patterned sheet of metal, e.g., etched or machined stainless steel. The support component 24 may be coated with an electrically-insulating dielectric material.

The support platform 21, the moving platform 23 and the base component 26 are each provided with a respective central aperture aligned with the optical axis O allowing the passage of light from the lens assembly 3 (Figure 1) to the image sensor 12 (Figure 1).

Movement of the moving platform 23 and, thus, the lens assembly 3 relative to the support platform 21, are driven by a lateral actuation arrangement comprising four SMA wires 27, i.e. SMA wires 27₀-27₃.

The support platform 21 includes a first set of four crimps 31 (hereinafter referred to as "static crimps"), i.e. static crimps 31₀-31₃. The moving platform 23 includes a second set of four crimps 33 (hereinafter referred to as "moving crimps"), i.e. moving crimps 33₀-33₃.

The first and second sets of crimps 31, 33 crimp the four SMA wires 27₁ so as to connect them to the support platform 21 and the moving platform 23. The SMA wires 27 may be perpendicular to the optical axis O or inclined at a small angle to the plane perpendicular to the optical axis O.

The crimps 31, 33 are provided with respective arm portions extending generally inwardly towards landing sites on the respective platforms 21, 23 to which they suitably attached.

Each of the SMA wires 27 includes a first length 27_{A} and a second length 27_{B}. The first and second lengths are orientated at an angle of ~90° relative to each other. The first and second lengths 27_{A}, 27_{B} are coupled to each by a coupling 32 (herein also referred to as a "flexure pulley coupling"). Each coupling 32 couples the first and second lengths 27_{A}, 27_{B} such that, when the SMA wire 27 is driven, contraction of the first length 27_{A} causes a displacement of the second length 27_{B} that provides a contribution to movement of the moving platform 23 that is in addition to the contribution provided by contraction of the second length 27b.

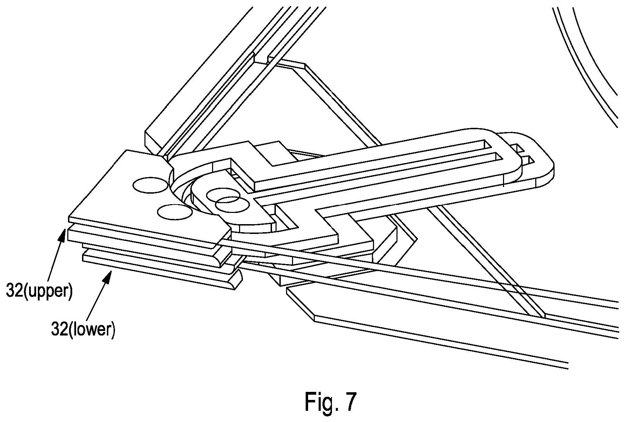

As will be explained in more detail below, the coupling 32 has a part 32c (Figure 7) that moves relative to the support platform 21 so as to provide this coupling between the first and second lengths.

Hence the SMA actuator assembly 2 operates in an equivalent way to that described in WO 2013/175197 A1, except that the length of each of the SMA wires 27 is increased by a factor of e.g. ~2 (without significantly increasing the footprint) and, therefore, the range of lateral movement perpendicular to the optical axis O (or "stroke") is increased by the same or a similar factor.

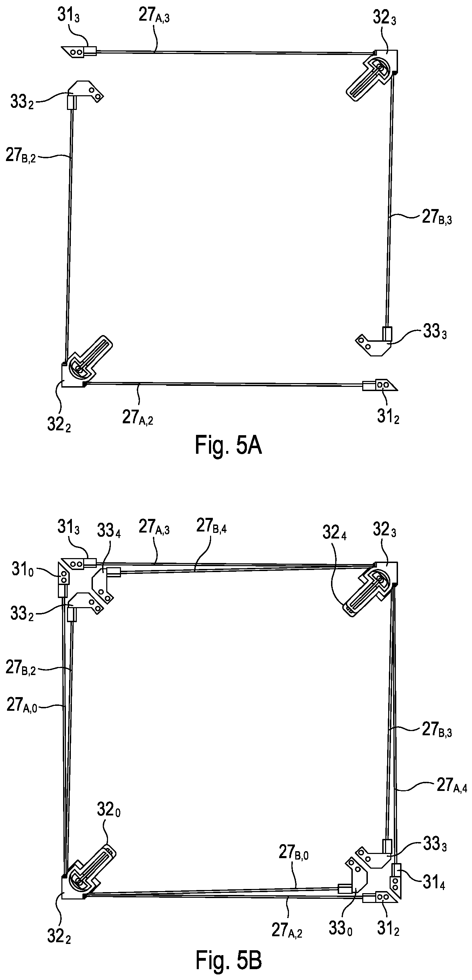

Referring in particular to Figures 5A and 5B, the arrangement of the SMA wires 27, static crimps 31, couplings 32 and moving crimps 33 will now be described in more detail.

A pair of static crimps 31 and a pair of moving crimps 33 are located at each of a first pair of diagonally-opposite corners (herein also referred to as "crimp corners") of the moving platform 23.

A pair of couplings 32 are located at each of a second, different pair of diagonally-opposite corners (herein also referred to as "coupling corners") of the moving platform 23.

The first length 27_{A} of each of the SMA wires 27 is connected at one of its ends to a static crimp 31, extends at least partway along an outer edge of the moving platform 23, and engages with the coupling 32 at the other of its ends. The second length 27_{B} of each SMA wire 27 engages with the coupling 32 at one of its ends, extends at least partway along an adjacent outer edge of the moving platform 23, and is connected at the other of its ends to a moving crimp 33.

Accordingly, each of the first and second lengths 27_{A}, 27_{B} partially overlaps with one other one of the first and second lengths 27_{A}, 27_{B} along an outer edge of the moving platform 23.

The elements holding the SMA wires 27 (i.e. the static crimps 31, couplings 32 and moving crimps 33) are configured such that the first and second lengths 27_{A}, 27_{B} on the same side of the actuator 2 are spaced from each other vertically (i.e. in a direction along the optical axis O) and, to some extent, laterally (i.e. in a direction away from the optical axis O). In this example, this is achieved by the pairs of couplings 32 being vertically stacked, as will be explained below. Meanwhile, all of the static crimps 31 are at the same height (i.e. the same position along the z-axis) and all of the moving crimps 33 are at the same height, and the moving crimps 31 are located on a smaller diameter (i.e. closer to the optical axis O) than the static crimps 32.

In operation, the SMA wires 27 are selectively driven to move the moving platform 23 relative to the support platform 21 in any lateral direction (i.e., a direction perpendicular to the optical axis O).

The position of the lens assembly 3 (Figure 1) relative to the support structure 4 (Figure 1) perpendicular to the optical axis O is controlled by selectively varying the temperature of the SMA wires 27. This is achieved by passing through SMA wires 27 selective drive signals that provide resistive heating. Heating is provided directly by the drive current. Cooling is provided by reducing or ceasing the drive current to allow the SMA wire 27 to cool by conduction, convection and radiation to its surroundings.

On heating of one of the SMA wires 27, the stress in the SMA wire 27 increases and it contracts, causing movement of the lens assembly 3. A range of movement occurs as the temperature of the SMA increases over the range of temperature in which there occurs the transition of the SMA material from the Martensite phase to the Austenite phase. Conversely, on cooling of one of the SMA wires 27 so that the stress in the SMA wire 27 decreases, it expands under the force from opposing ones of the SMA wires 27. This allows the lens assembly 3 (Figure 1) to move in the opposite direction.

The SMA wires 27 may be made of any suitable SMA material, for example Nitinol or another titanium-alloy SMA material.

The drive signals for the SMA wires 27 are generated and supplied by the control circuit implemented in the IC 7 (Figure 1). The drive signals are generated by the control circuit in response to output signals of the gyroscope sensor 8 (Figure 1) so as to drive movement of the lens assembly 3 to stabilise an image focused by the lens assembly 3 (Figure 1) on the image sensor 12 (Figure 1), thereby providing OIS.

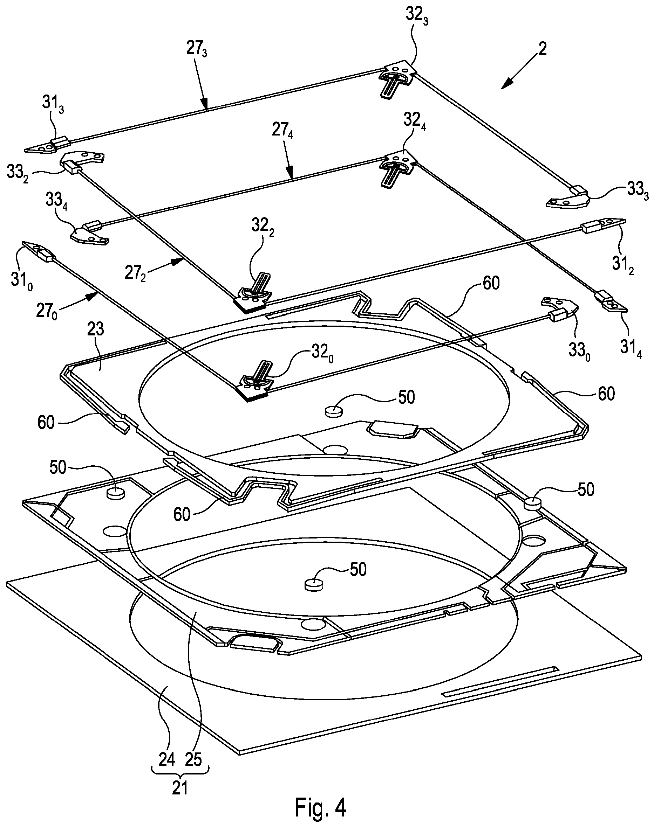

Referring in particular to Figure 4, the actuator assembly 2 includes four plain bearings 50 spaced around the optical axis O to bear the moving platform 23 on the support platform 21. In general, a different number of bearings 50 may be used. Preferably, at least three bearings 50 are used in order to assist in providing stable support.

Each plain bearing 50 includes a bearing member which in this case takes the form of cylinder. The bearing member may be fixed to the support platform 21, for example by adhesive. In this case, a surface 52 ("upper surface") of the bearing member on the opposite side from the support platform 21 and a surface (not shown) ("underside" or "downward-facing side") of the moving platform 23 are planar, conforming surfaces which contact one another. Alternatively, the bearing member may be fixed to the moving platform 23.

Thus, the contact between the conforming surfaces supports and bears the moving platform 23 on the support platform 21, allowing relative motion parallel to their extent, i.e., perpendicular to the optical axis O.

The bearing 50 may be made from a suitable metal or alloy such as phosphor bronze or stainless steel with a diamond-like carbon coating.

The actuator assembly 2 also includes a set of four arms 60 connected between the support platform 21 and the moving platform 23. The arms 60 are resilient and are configured to provide a suitable retaining force along the optical axis O, and also to permit lateral movement with a suitable lateral biasing force. The arms 60 also provide electrical connections from the support structure 21 to the moving platform 23.

In the assembled state of the actuator assembly 2, the arms 60 are deflected from their relaxed state in such a way that the arms 60 provide a force (i.e., the retaining force) which biases the platforms 21, 23 together and maintains the contact in the plain bearings 50. At the same time, the arms 60 can be laterally deflected to permit the movement of the moving platform 23 relative to the support platform 21 in directions perpendicular to the optical axis O.

The arms 60 provide a force (i.e., the lateral biasing force) that biases the moving platform 23 and hence the lens assembly 3 (Figure 1) towards a central position from any direction around the central position, wherein the central position corresponds to the optical axis O of the lens assembly 3 being substantially aligned with the centre of the light-sensitive region of the image sensor 12 (Figure 1). As a result, in the absence of driving of the lateral movement of the lens assembly 3 (Figure 1), the lens assembly 3 (Figure 1) will tend towards the central position from any direction around the central position. This ensures that the camera 1 remains functional to capture images, even in the absence of driving of the SMA wires 27. The magnitude of the lateral biasing force is kept low enough so as not to hinder OIS whilst preferably being high enough to centre the lens assembly 3 (Figure 1) in the absence of driving.

Each arm 60 is generally 'L'-shaped and extends around the optical axis O. The angular extent of each arm 60 is preferably at least 90° as measured between the endpoints of the arm 60.

In this example, the arms 60 are formed integrally with the moving platform 23 at one end thereof and are connected to the support platform 21 at the other end thereof. Alternatively, the arms 60 may be formed integrally with the support platform 21 and connected to the moving platform 23 or the arms 60 may be separate parts connected to both platforms 21, 23. The arms 60 may be connected to the plate(s) 21, 23 by welding, which provides both mechanical and electrical connections.

The arms 60 are made of a suitable material that provides the desired mechanical properties and is electrically conductive. Typically, the material is a metal having a relatively high yield, for example steel such as stainless steel.

The arms 60 follow the outer edges of the moving platform 23 as illustrated.

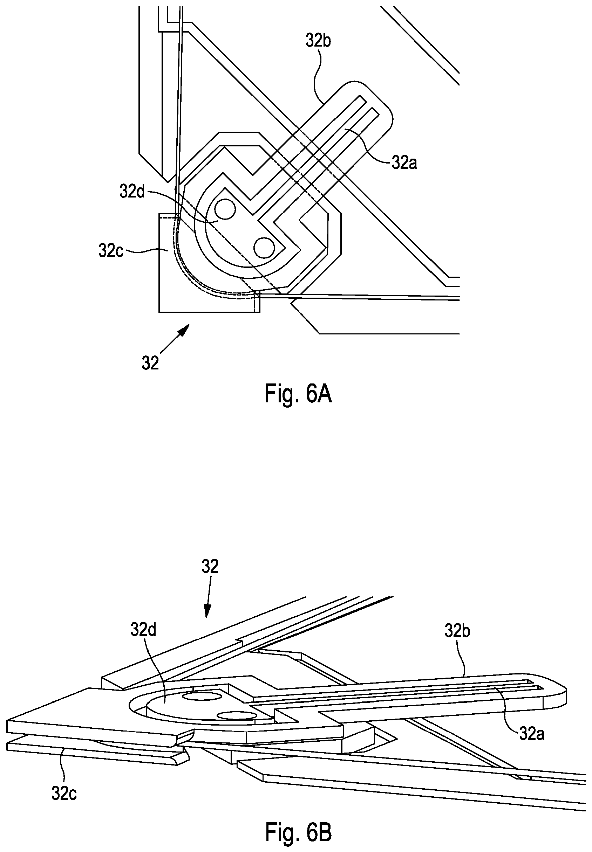

Referring in particular to Figures 6A, 6B and 7, the flexure pulley couplings 32 will now be described in more detail.

Each coupling 32 includes a first flexure part 32a and a second flexure part 32b. Each coupling 32 also includes a wire capture part 32c and a foot 32d.

The first flexure part 32a, second flexure part 32b, foot 32d and part of the wire capture part 32c lie in the same plane and may be formed from a sheet of metal.

As mentioned above, pairs of couplings 32 are vertically stacked. The foot 32d of the lower coupling 32 is attached to the support platform 21, e.g. welded to an electrically-isolated feature of the conductive component 25. The foot 32d of the upper coupling 32 is attached to the static part, i.e. foot 32d, of the lower coupling 32.

The wire capture part 32c includes an upper plate, a curved inner wall and a lower plate (these elements are not individually labelled in the drawings). The wire capture part 32c hooks the SMA wire 27, preventing inwards lateral or upwards or downwards movement.

The curved inner wall has a radius that is at least the minimum bend radius of the SMA wire 27 to ensure a safe feature for the SMA wire 27 to contact.

The wire capture part 32c may be formed by welding a half-etched feature from the crimp component (forming the upper plate and curved inner wall) to the first flexure part 32a (forming the lower plate and curved inner wall).

The first flexure part 32a extends laterally inwards from the foot 32d, while the second flexure part 32b extends laterally inwards from the wire capture part 32c. The first and second flexure parts 32a, 32b are connected to each other at their innermost ends.

The first and second flexure parts 32a, 32b flex in the x-y plane when the SMA wire 27 changes in length such that the wire capture part 32c moves around the optical axis O (e.g. at an approximately constant distance from the optical axis O). When doing so, the first flexure part 32a is in tension and the second flexure part 32b is in compression. To avoid buckling, the second flexure part 32b has a higher stiffness than the first flexure part 32b. In this example, this is achieved with a relatively narrow first flexure part 32b that sits within two relatively wide arms making up the second flexure part 32b.

Each SMA wire 27 may be pre-assembled in a static crimp 31, a coupling 32 and a moving crimp 33. The pre-assembly may then be attached to the platforms 21, 23.

### Other variations

It will be appreciated that there may be many other variations of the above-described embodiments.

The first and second lengths of wire may be orientated at angle other than ~90° relative to each other.

The coupling 32 may have a different form. For example, it may consist of a single flexure part that extends outwardly from a foot to a wire capture part.

Instead of four SMA wires 27, each including a first length 27_{A} and a second length 27_{B}, there may be eight SMA wires, each corresponding to a first length 27_{A} or a second length 27_{B}. In this case, instead of a wire capture part 32c as described, the coupling 32 may include a pair of crimps.

Instead of two lengths, i.e. first and second lengths 27_{A}, 27_{B}, each SMA wires 27 may include three or more lengths.

One or more of the couplings may be connected to the moving platform.

The moving platform need not move only in the x-y plane.

The actuator assembly need not be configured to support a lens assembly and, for example, may be configured to support another type of optical element, an image sensor, etc. The platforms need not include apertures.

The actuator assembly need not be used in a camera.

The z-axis need not correspond to an optical axis. The z-axis may correspond to a line that is perpendicular to a plane defined by planar surfaces of the moving and/or support platform. The z-axis may correspond to a line that is perpendicular to a plane defined by the directions of movement of the moving platform.

### Other embodiments

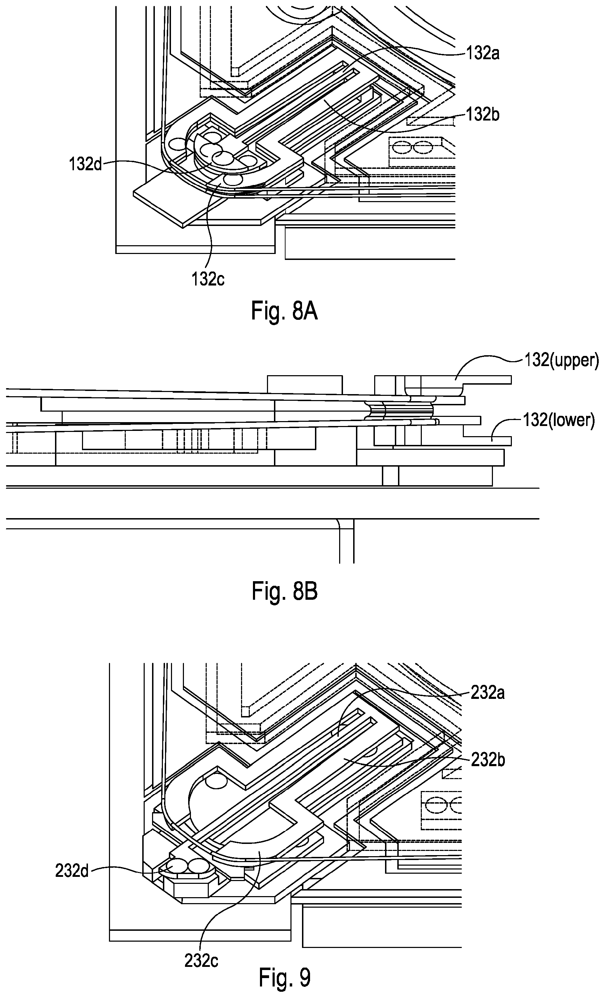

Figures 8A and 8B are respectively a perspective view and a side plan view of a stack of two of the couplings according to a second embodiment of the present invention. The vertically stacked couplings 132 (upper), 132 (lower) are functionally similar to the corresponding couplings 32 (upper), 32 (lower) of the first embodiment as shown in Figure 7. For example, the couplings 132 each includes a first flexure part 132a and plural second flexure parts 132b, as well as a wire capture part 132c and a foot 132d. For conciseness, like features are not described again.

Similar to the first embodiment, the wire capture part 132c includes an upper plate, a curved inner wall, and a lower plate that forms a groove for receiving the SMA wire 127. The wire capture part 132c hooks the SMA wire 127, preventing inwards lateral or upwards or downwards movement. The wire capture part 132c may be formed by welding a half-etched feature forming the lower plate and curved inner wall to the first flexure part 132a (forming the upper plate and curved inner wall). The curved inner wall has a radius that is at least the minimum bend radius of the SMA wire 127 to provide a safe feature for the SMA wire 127 to contact.

As shown in Figures 8A and 8B, the wire capture part 132c comprises a break between two discontinuous sections. More specifically, each of the second flexure parts 132b is connected with a discontinuous section of the wire capture part 132c, with SMA wire 127 suspended between the two discontinuous sections. The two discontinuous sections as shown have the same radius, but they may have different radii in other embodiments. Thus, the discontinuous sections of the wire capture part 132c may be an extension of the second flexure part 132b.

The second flexure parts 132b are rigid, or at least stiffer than the first flexure part 132a. Thus, upon actuation of the SMA wires 127, the second flexure parts 132b and the wire capture parts 132c may rotate with respect to their respective foot 132d. That is, the second flexure parts 132b may act as levers for moving the movable part.

The removal of a portion of the wire capturing part 132c reduces the contact with the SMA wire 127. Accordingly, such an arrangement may reduce friction between the two components, thus reduces energy consumption, as well as wear.

Figure 9 is a perspective view of one of the couplings according to a third embodiment of the present invention. The coupling 232 is shown as a single coupling. Alternatively, it may be a lower coupling in a stack where a corresponding upper coupling is also present. The coupling 232 is functionally similar to corresponding couplings 132 of the second embodiment as shown in Figures 8A & 8B. For example, the coupling 232 includes a first flexure part 232a and plural second flexure parts 232b, as well as a wire capture part 232c and a foot 232d. For conciseness, like features are not described again.

Similar to the second embodiment, the wire capture part 232c comprises a break in between two discontinuous sections. As shown in Figure 9, the first flexure part 232a extends through the gap between the two discontinuous sections of the wire capture part 232c. As such, a lengthier first flexure part 232a may be employed which, advantageously, enables a wider range of rotational movement in the wire coupling part 232c. Furthermore, the first flexure part 232a may be constructed from a stiffer material to achieve a similar range of movement with respect to the first embodiment (e.g. with a reduced degree of bending).

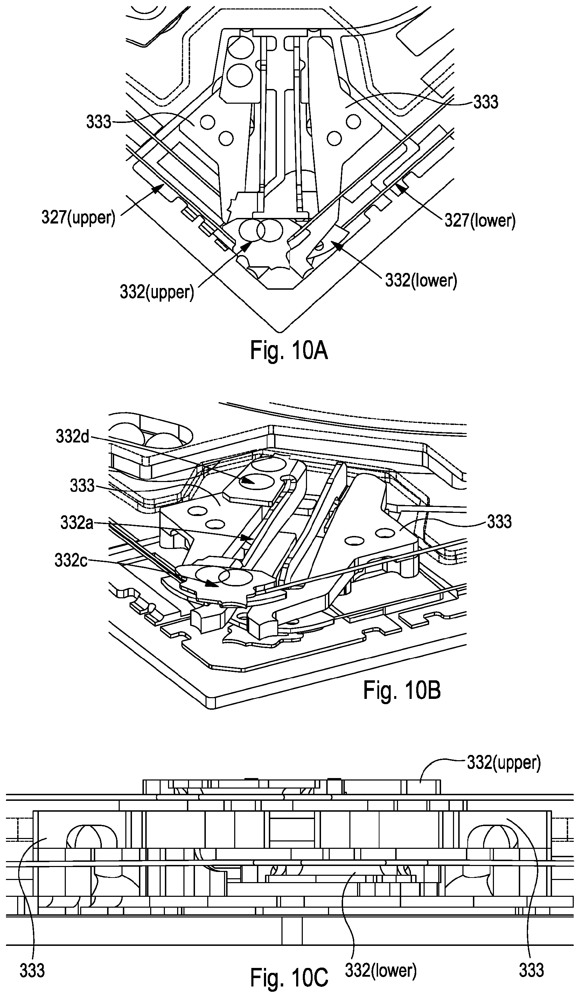

Figures 10A, 10B and 10C are respectively a plan view, a perspective view and a side section view of a stack of two of the couplings according to a fourth embodiment of the present invention. The vertically stacked couplings 332 (upper), 332 (lower) are functionally similar to the corresponding couplings 32 (upper), 32 (lower) of the first embodiment as shown in Figure 7, but with a different construction.

As shown in Figures 10A, 10B and 10C, each of the couplings 332 (upper), 332 (lower) comprises a planar first flexure part 332a having its smallest dimension extending in the movement plane (X-Y plane), which allows it to flex only in the movement plane. More specifically, the first flexure part 332a is compliant in the X-Y direction but precludes movement in the Z direction.

Advantageously, whilst various parts of the coupling 332a are formed from the same material, such an arrangement allows the stiffness of the flexure to depend on the thickness of the first flexure part 332a. For example, a thicker first flexure part 332 would provide a larger biasing force in the X-Y plane but increases the resistance to bending. Thus, it is preferred to provide a thin first flexure part to ensure its compliance in the X-Y direction.

The first flexure part 332 forms integrally with perpendicularly extending planar portions of wire capture part 332c and foot 332d at each of its ends. The second flexure arms are not featured in this embodiment. Because of the orientation of the planar wire capture part 332c and foot 332d, they resist flexing in the movement plane.

The coupling 332 may be formed from a single sheet of material by bending along a predetermined line (or a line of weakness) between adjacent parts. Thus, advantageously, such an arrangement may offer an efficient and economical manufacturing process.

The flexibility in the first flexure part 332a presents a risk of damage if the actuator is put under high impact conditions (e.g. sudden drop), especially when the second flexure part 332b is not present in this embodiment. Thus, the fourth embodiment additionally comprises a pair of endstops 333 each anchored to the foot 332d of the respective coupling 332. The endstops 333 are elongate members sandwiched between the two wire capture parts 332a and extend in the same plane as the first flexure part 332a. The endstops 333 are preferably rigid members, or at least they are stiffer than the first flexure parts 332a. The endstops 333 are configured to define, with respect to the movement plane, an end of a movement range in the first flexure part, e.g. to a point where the first flexure part 332a abuts the side of the endstops 333.

The endstops 333 are also configured to prevent damage to the actuator by limiting excessive axial movement in the wire capture part 332c under inertia.

In the example shown in Figure 10C, it is shown that the inward-facing surfaces of the wire capture parts 332c are in contact with the end stops 333. In operation, the wire capture part 332c may glide across the surface of the endstops 333. Thus, such contact does not hinder the lateral movement of the wire capture parts 332c. In other embodiments, a small gap may be present between the wire capture parts 332c and the endstops 333 so as to eliminate friction therebetween.

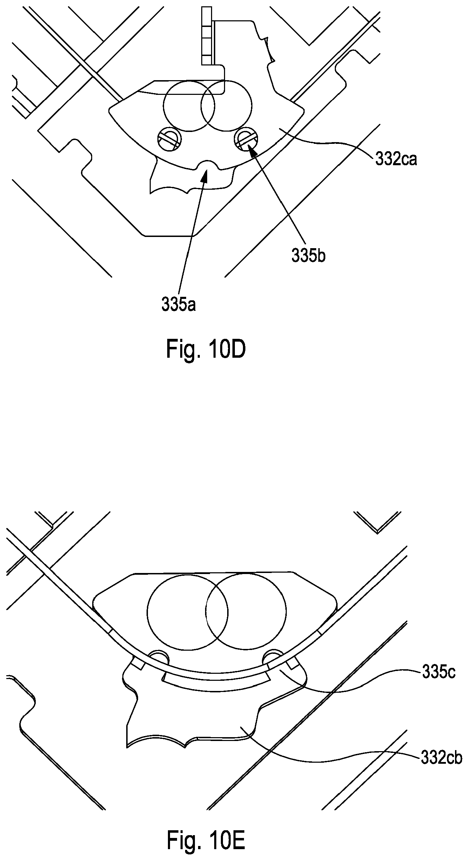

Figures 10D and 10E are respectively enlarged plan views of a wire capture part 332c and a lower part of the wire capture part 332cb of the coupling as shown in Figures 10A, 10B and 10C. For example, the wire capture part 332c may be formed by welding or adhering an upper part 332ca to the lower part of the wire capture part 332cb. That is, the groove that accommodates the shape memory alloy wire 327 may be formed from respective etched portions of the upper 332ca and the lower parts 332cb.

In the illustrated embodiments, the SMA wire 327 is adhered to the wire capture part 332c to eliminate slippage between the two components. Preferably, the SMA wire 327 adheres towards the central region of the groove so that the portion of the SMA wire 327 towards the peripheries of the groove may remain freely moveable during operation. To facilitate this process, the upper part 332ca is provided with cut-out 335a so the adhesive (or weld) can be applied more readily to the SMA wire 327 in an assembled wire capture part 332c. Furthermore, the upper part 332ca and the lower part 332cb are respectively provided with orifice 335b and recesses 335c to capture, and to retain, excessive adhesives during the adhesion process.

The groove in the wire capturing part 332c comprises multiple radii as viewed in the plan view of Figures 10D and 10E. That is, the groove may have a smaller radius towards its central portion and larger radii towards its peripheries. Such an arrangement ensures the portions of SMA wires closest to the edges of the wire capture part 332c to bend at a reduced curvature. Advantageously, such an arrangement reduces the likelihood of forming sharp bends in the SMA wire during operation, thus reducing wear.

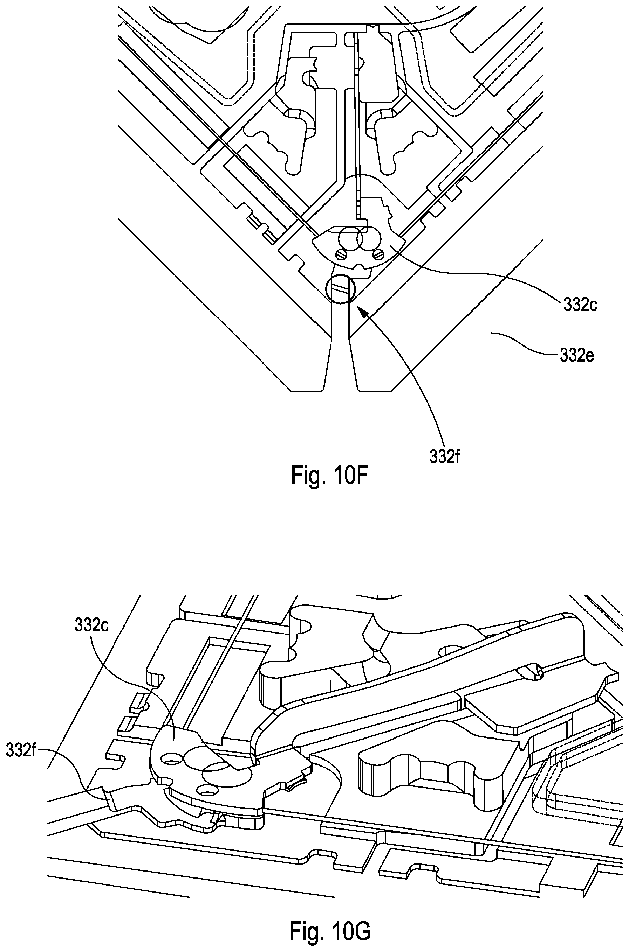

Figures 10F and 10G are respectively an enlarged plan view and an enlarged perspective view of a sub-assembly frame 332e connected to the wire capture part of the coupling as shown in Figures 10A-E. That is, a sub-assembly comprising the plural couplings may be applied to the support structure or the movable part so that the foot of the couplings may be aligned to their predetermined location simultaneously, thereby enabling a much more efficient assembly process.

In Figures 10F and 10G, the lower wire capture part 332cb comprises an outwardly extending tab that is connected, along a line of weakness 332f, with a corresponding tab of the sub-assembly frame 332e. Once the foot 332d has been attached to a predetermined location, the sub-assembly can readily be detached by severing the connection, preferably by a laser. Alternatively, a mechanical means may be used for severing the link.

The line of weakness 332f may be a localised thinned section formed by stamping, cutting or etching. In some embodiments, a pigment may be applied along the line of weakness to increase localised laser/heat absorption.

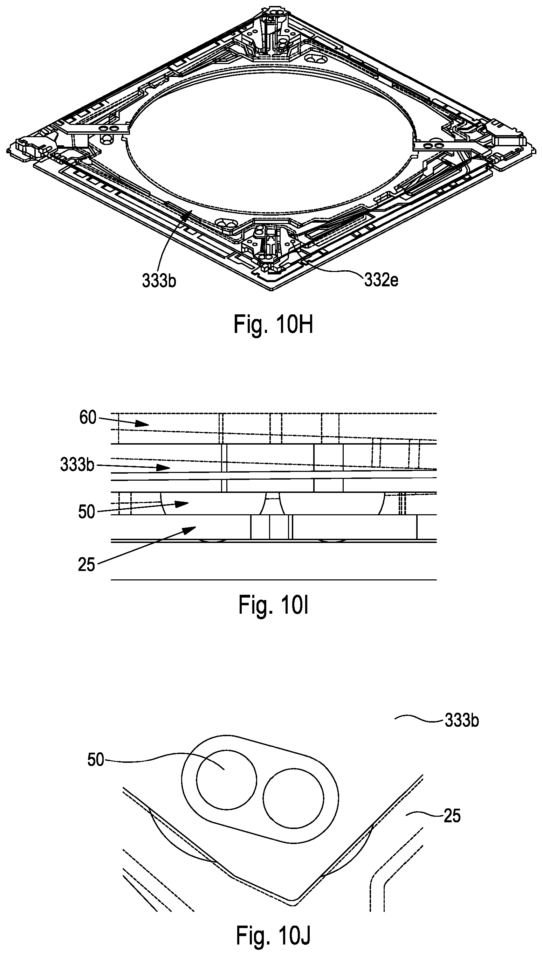

Figures 10H, 10I and 10J are respectively a perspective view, an enlarged side sectional view and an enlarged plan view of the actuator assembly featured in Figures 10A-10G;
As seen from Figures 10H-J, the end stops 333 are manufactured in the same etching as the spring stiffener 333b (that stiffens the spring 60). This is beneficial from the manufacturing and cost perspective as it requires fewer assembly processes, as well as reducing waste. The same reason applies to the use of both the spring stiffener 333b and the conductor 25 to contain the ball bearings 50 (if used in lieu of the plain bearing 50) in the actuator.

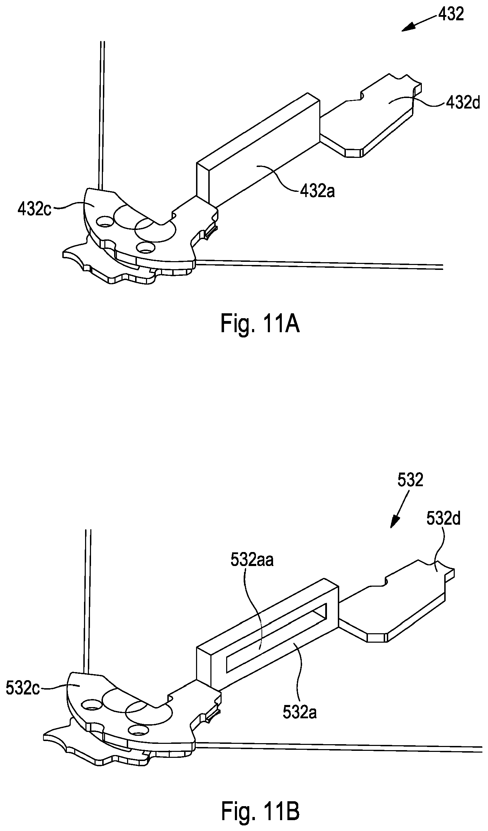

Figures 11A and 11B are respectively perspective views of a coupling according to a fifth embodiment and a sixth embodiment of the present invention. More specifically, both couplings 432 and 532 are design alternatives functioning in a similar manner to the coupling 332 of the fourth embodiment.

The coupling 432 as shown in Figure 11A comprises a planar first flexure part 432a that is significantly thicker (or thinner in other embodiments) than the corresponding planar wire capture part 432c and foot 432d. That is, the various components of the coupling 432 may form from different discrete parts (joined by welding or adhesives). Or preferably, the various components of the coupling 432 may be integrally formed by using the same process for forming the coupling 332, and additionally with an etching process to reduce thickness in the first flexure part 432a or both the wire capture part 432c and foot 432d to effect different thicknesses. This way, the stiffness of the first flexure part 432a may be readily specified.

The coupling 532 as shown in Figure 11B comprises a planar first flexure part 532a having a voided section 532aa. That is, the first flexure part 532a resembles a frame surrounding the voided section 532aa. The various components in the coupling 532 may be integrally formed by using the same process for forming the coupling 332, and additionally with an etching, cutting or stamping process to create the voided section 532aa. The creation of a voided section 532aa reduces the overall stiffness of the first flexure part 532a. Alternatively, the voided section 532aa may be a thinned section where the thickness of the thinned section is thinner than any other parts of the first flexure part 532a. The provision of a thinned section reduces the overall stiffness of the first flexure part 532a. Alternatively, the voided section 532aa may be replaced by a thickened section where the thickness of the thickened section is thicker than any other parts of the first flexure part 532a. The creation of a thickened section reinforces the overall stiffness of the first flexure part 532a. In some embodiments, the first flexure part 532a may comprise a mixture of any number of voided sections, thinned sections and thickened sections in order to effect different localised stiffnesses of the first flexure part 532a.

In some embodiments, the frame in the first flexure part 432a may be provided in other forms. For example, it does not have to surround the voided section, thinned or thickened section. The frame can be a half-frame extending along one side of the voided section. The frame can be a single beam with voided section provided on either side, e.g. the first flexure part 432a may comprise a narrowed section.

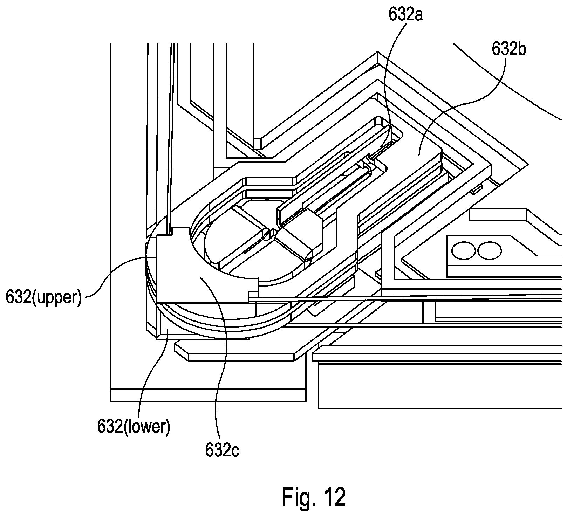

Figure 12 is a perspective view of a coupling according to a seventh embodiment of the present invention. The vertically stacked couplings 632 (upper), 632 (lower) are functionally similar to the corresponding couplings 132 (upper), 132 (lower) of the first embodiment as shown in Figures 8A and 8B, with their first flexure parts 632a being replaced by a planar element similar to that featured in the third embodiment of Figure 10B. More specifically, the couplings 632 each includes a first flexure part 632a and a second flexure part 632b resembling a flexure body frame, as well as a wire capture part 632c and a foot 632d. For conciseness, like features are not described again.

More specifically, the couplings 632 is formed by attaching a rigid flexure body frame 632b to an end of the first flexure part 332a as shown in Figure 10B, by means of adhesion or welding. Such an arrangement enables the stiffness of the first flexure part 632a to be dependent on its thickness, wherein the wire capture part 632c may rotate around the foot 632d. In the illustrated embodiment, a wire capture part 632c is attached to the surface of the flexure body frame 632b. In other embodiments, the wire capture part 632c may be integrally formed with the flexure body frame 632b that includes a groove at its leading edge. In some other embodiments, the wire capture part 632c may comprise plural discontinuous sections similar to the second embodiment as shown in Figures 8A and 8B. In this case, the flexure body frame 632b may resemble a "C" shaped member.

Alternatively, the coupling 632 may be formed integrally by etching, or bending, or stamping from a single sheet of material.

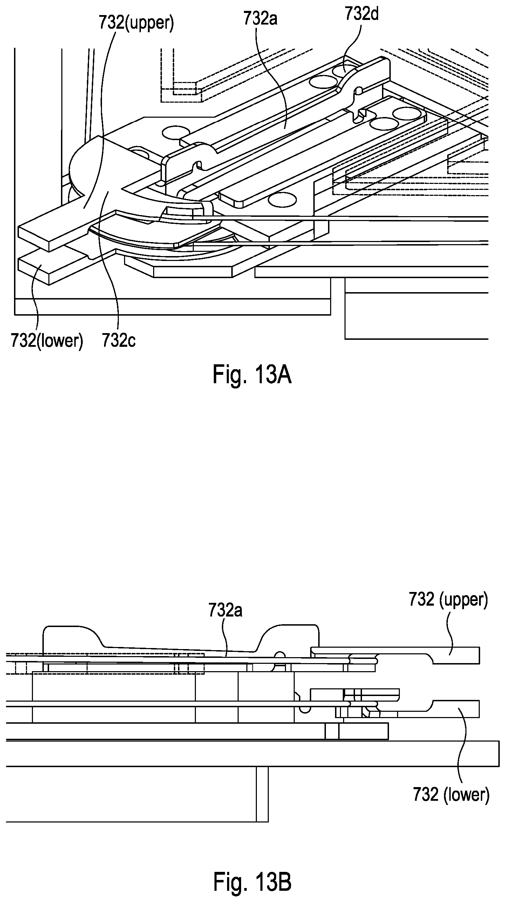

Figures 13A and 13B are respectively a perspective view and a side section view of a coupling according to an eighth embodiment of the present invention. The coupling 732 is an alternative design that is functionally similar to the coupling 332 of Figure 10B. For conciseness like features are not described again.

The coupling 732 comprises an elongate foot 732d for providing additional attaching surface with the moveable part (or support structure). Furthermore, the first flexure parts 732a of the stacked lower and upper couplings 732 are also substantially overlayed over each other (or stacked). Such an arrangement allows the first flexure parts 732a to bend further in the movement plane than the previous embodiments, as the two first flexure parts 732a do not extend in the same plane, and therefore there is no risk of collision between them.

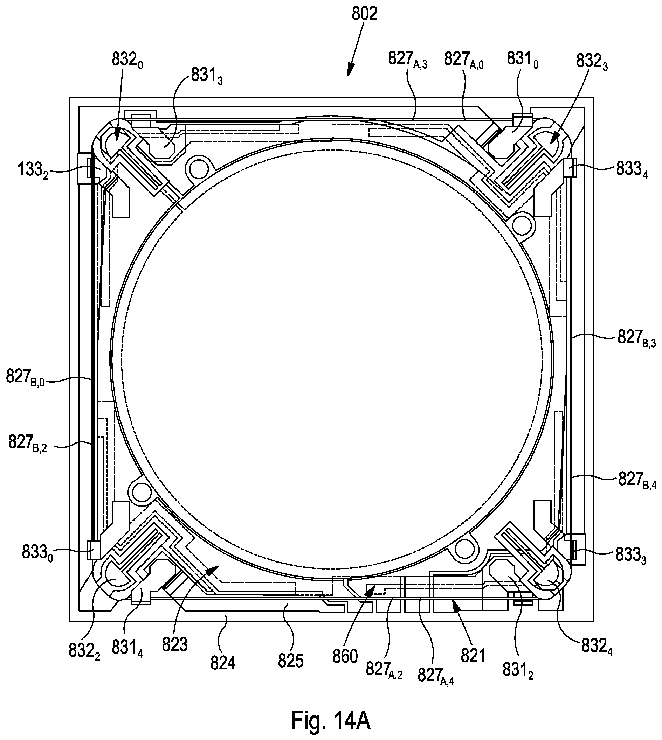

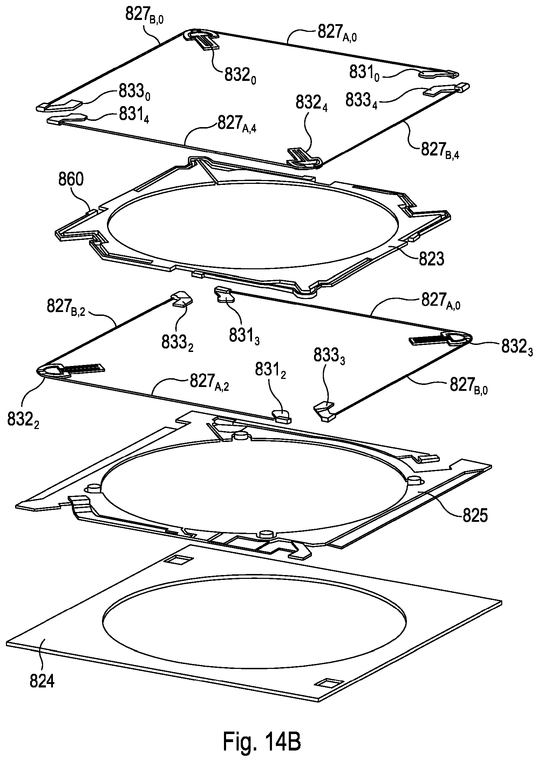

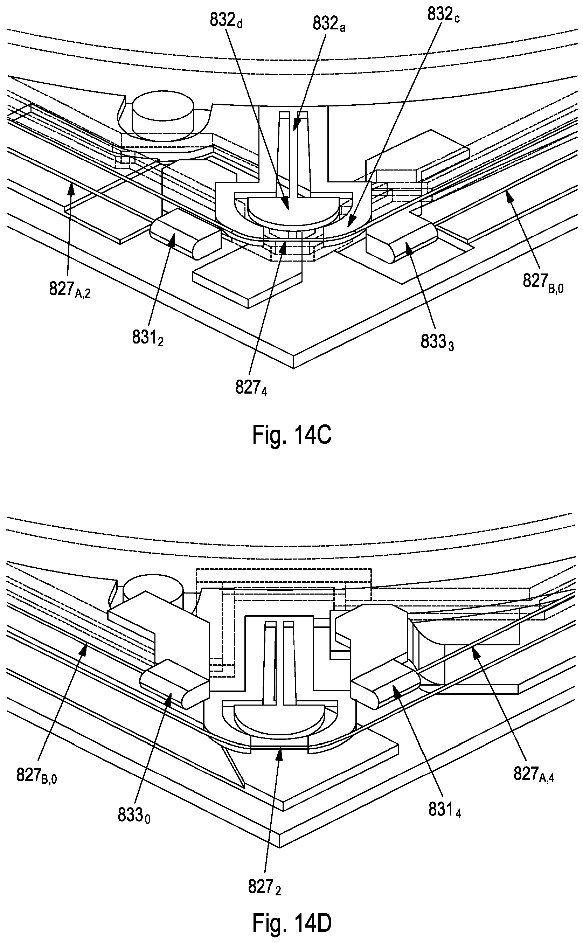

Figures 14A and 14B are respectively a plan view and an exploded perspective view of an SMA actuator according to a ninth embodiment of the present invention, whereas Figures 14C and 14D are respectively perspective view of two adjacent corners of the SMA actuator of Figures 14A and 14B.

In summary, the couplings 832₁₋₄ in the actuator 802 are not stacked. Rather, the couplings 832₁₋₄ extends substantially in the same plane (movement plane), and are evenly distributed around the centre of the actuator 802.

Referring in particular to Figures 14A and 14B, the actuator assembly 802 includes a support platform 821 and a moving platform 823.

The actuator assembly 802 may include a base component 826, which is affixed to the support platform 821.

Each of the moving platform 823, the support component 824 and the conductive component 825 may take the form of a patterned sheet of metal, e.g., etched or machined stainless steel. The support component 824 may be coated with an electrically-insulating dielectric material.

The layout of the structural components in the actuator assembly 802 are similar to that in the actuator assembly 2 in Figure 7.

Movement of the moving platform 823 and, thus, the lens assembly 3 relative to the support platform 821, are driven by a lateral actuation arrangement comprising four SMA wires 27, i.e. SMA wires 27₀-27₃.

The support platform 821 includes a first set of four crimps 831 (hereinafter referred to as "static crimps"), i.e. static crimps 831₀-831₃. The moving platform 823 includes a second set of four crimps 833 (hereinafter referred to as "moving crimps"), i.e. moving crimps 833₀-833₃.

The first and second sets of crimps 831, 833 crimp the four SMA wires 827₁ so as to connect them to the support platform 821 and the moving platform 823. The SMA wires 827 may be perpendicular to the optical axis O or inclined at a small angle to the plane perpendicular to the optical axis O.

The crimps 831, 833 are provided with respective arm portions extending generally inwardly towards landing sites on the respective platforms 821, 823 to which they suitably attached.

Each of the SMA wires 827 includes a first length 827_{A} and a second length 827_{B}. The first and second lengths are orientated at an angle of ~90° relative to each other. The first and second lengths 827_{A}, 827_{B} are coupled to each by a coupling 832. Each coupling 832 couples the first and second lengths 827_{A}, 827_{B} such that, when the SMA wire 827 is driven, contraction of the first length 827_{A} causes a displacement of the second length 827_{B} that provides a contribution to movement of the moving platform 823 that is in addition to the contribution provided by contraction of the second length 827b.

The coupling 832 has a part 882c (Figure 14C and 14D) that moves relative to the support platform 821 so as to provide this coupling between the first and second lengths. The coupling 832 may take the form of any of the couplings described herein, e.g. the coupling 32 or the coupling 332.

Hence the SMA actuator assembly 802 operates in an equivalent way to that described in WO 2013/175197 A1, except that the length of each of the SMA wires 827 is increased by a factor of e.g. ~2 (without significantly increasing the footprint) and, therefore, the range of lateral movement perpendicular to the optical axis O (or "stroke") is increased by the same or a similar factor.

A static crimp 831 and a moving crimp 833 are located at each of the corners (herein also referred to as "crimp corners") of the moving platform 823.

A coupling 832 is located at each of corners (herein also referred to as "coupling corners") of the moving platform 823.

The first length 827_{A} of each of the SMA wires 827 is connected at one of its ends to a static crimp 831, extends at least partway along an outer edge of the moving platform 823, and engages with the coupling 832 at the other of its ends. The second length 827_{B} of each SMA wire 827 engages with the coupling 832 at one of its ends, extends at least partway along an adjacent outer edge of the moving platform 823, and is connected at the other of its ends to a moving crimp 833.

Accordingly, each of the first and second lengths 827_{A}, 827_{B} partially overlaps with one other one of the first and second lengths 827_{A}, 827_{B} along an outer edge of the moving platform 823.

The elements holding the SMA wires 827 (i.e. the static crimps 831, couplings 832 and moving crimps 833) are configured such that the first and second lengths 827_{A}, 827_{B} on the same side of the actuator assembly 802 are spaced from each other vertically (i.e. in a direction along the optical axis O) but extend parallel to each other. In this example, this is achieved by having the couplings 832 provided at each corner of the moveable platform 823. In some examples, all of the static crimps 31 are at the same height (i.e. the same position along the z-axis) and all of the moving crimps 33 are at the same height.

In some examples, two ("upper") couplings 832₀, 832₄ at diagonally opposite corners of the actuator assembly 802 are connected to the moving platform 823 and the other two ("lower") couplings 832₂, 832₃ are connected to e.g. the support component 824. The upper couplings 832₀, 832₄ are at a similar height to each other and are vertically spaced from the lower couplings 832₂, 832₃ which are also at a similar height to each other. Each corner of the actuator assembly 802 also includes a static crimp 31 and a moving crimp 33. In each corner of the actuator assembly 802 with an upper coupling 832 (see e.g. Fig. 14C), the static crimp 31 and the moving crimp 33 is vertically spaced from the upper coupling 832 and are at a similar height to each other and to the lower coupling 832. In each corner of the actuator assembly 802 with a lower coupling 832 (see e.g. Fig. 14D), the static crimp 31 and the moving crimp 33 is vertically spaced from the lower coupling 832 and are at a similar height to each other and to the upper coupling. Accordingly, the SMA wires 27₀-27₃ are formed in two layers, i.e. upper and lower layers.

In operation, the SMA wires 827 are selectively driven to move the moving platform 823 relative to the support platform 821 in any lateral direction (i.e., a direction perpendicular to the optical axis O), similar to the SMA actuator 2 as shown in Figure 7.

In some embodiments (not shown), the SMA actuator assembly comprises a support and plural movable parts (e.g. one or more intermediate movable stages and a final movable stage) in a stacked (and/or nested) configuration. The final movable stage may be considered to be the moveable part that delivers an overall stroke that is additive from all other stages. More specifically, the SMA actuator assembly may comprise multiple stacked SMA actuator assemblies as shown in Figures 2 - 18. The stacked SMA actuator assemblies may be the same, or different according to the application. That is, the one or more stacked movable stages may each be moveable, along the first plane, relatively to the support or an intermediate stage adjacent to the respective moveable stage.

In embodiments where the SMA actuator assembly consists of only one intermediate stage and a final stage, the intermediate stage may be moveable relative to the support and may itself form a support for the final stage. For example, in such embodiments, the final stage may move with the intermediate stage and relative to the support structure (e.g. when only the intermediate stage is moved), or it may move only relative to the intermediate stage (e.g. when the intermediate stage maintains its position relative to the support). The intermediate stage may move relative to both the final stage and the support, preferably in the same direction, to achieve the greatest stroke possible in the said direction.

By the contraction of the corresponding SMA wires, each stage may move in a single axis or at least two non-parallel directions. That is, in some embodiments where each stage moves only in a discrete axis, the X and Y movements may be controlled independently by corresponding stages.

The actuator assembly may be any type of assembly that comprises a first part and a second part movable with respect to the first part. The actuator assembly may be, or may be provided in, any one of the following devices: a smartphone, a protective cover or case for a smartphone, a functional cover or case for a smartphone or electronic device, a camera, a foldable smartphone, a foldable smartphone camera, a foldable consumer electronics device, a camera with folded optics, an image capture device, an array camera, a 3D sensing device or system, a servomotor, a consumer electronic device, a mobile or portable computing device, a mobile or portable electronic device, a laptop, a tablet computing device, an e-reader, a computing accessory or computing peripheral device, an audio device, a security system, a gaming system, a gaming accessory, a robot or robotics device, a medical device, an augmented reality system, an augmented reality device, a virtual reality system, a virtual reality device, a wearable device, a drone, an aircraft, a spacecraft, a submersible vessel, a vehicle, and an autonomous vehicle, a tool, a surgical tool, a remote controller, clothing, a switch, dial or button, a display screen, a touchscreen, a flexible surface, and a wireless communication device. It will be understood that this is a non-exhaustive list of example devices.

## Claims

1. A shape memory alloy actuator assembly (2) comprising:
a support (21), wherein a first plane is defined with reference to the support;
a movable part (23) movable relative to the support along at least two different non-parallel directions in the first plane;
plural units of shape memory alloy wire (27), each unit connected between the movable part and the support so as to be capable of being driven to produce movement in the at least two directions without applying any net torque to the movable part in the first plane;
wherein at least one of the units comprises a series of two or more lengths of shape memory alloy wire between the movable part and the support, including a first length (27_{A}) and a second length (27_{B}), wherein the first and second lengths are orientated at a non-zero angle relative to each other and **characterised in that** the first and second lengths are coupled to each other by way of a coupling part (32) that is configured to move relative to the support (21) and relative to the moveable element (23) such that, when the unit is driven, contraction of the first length causes a displacement of the second length that provides a contribution to movement of the movable part that is in addition to the contribution provided by contraction of the second length.

2. An assembly according to claim 1, wherein the plural units of shape memory alloy wire (27) comprise two or four units of shape memory alloy wire.

3. An assembly according to claim 1 or claim 2, wherein at least one of the coupling parts (32) is connected to the support (21)and/or wherein at least one of the coupling parts (32) is connected to the movable part (23).

4. An assembly according to any preceding claim, wherein at least one of the coupling parts (32) is comprised in or attached to a flexure (32a, 32b) that flexes in the first plane so as to provide the said coupling between the first and second lengths (27_{A}, 27_{B}).

5. An assembly according to claim 4, wherein the flexure (32a, 32b) comprises a first part (32a) that is in tension when the flexure is flexing in the first plane and a second part (32b) that is in compression when the flexure is flexing in the first plane; and,
optionally, wherein the second part of the flexure (32b) has a higher stiffness than the first part of the flexure (32a).

6. An assembly according to claim 5, wherein the first and second parts of the flexure (32a, 32b) lie in the same plane; and/or
wherein the second flexure part (32b) rotates around the first flexure part (32a) for effecting movement in the coupling part.

7. An assembly according to claim 4, wherein the flexure (332) comprises a part (332a) that is generally in compression when the flexure is flexing in the first plane; and,
optionally, wherein the part (332a) has a higher compliance in the first plane than in a direction perpendicular to the first plane, and, optionally, where the part (332a) has a cross section that is elongate in a direction perpendicular to the first plane.

8. An assembly according to any one of claims 4 to 6, comprising at least one stack of two flexures (32(upper), 32(lower)), wherein the flexures in the stack are spaced from each other in a direction perpendicular to the first plane; and,
optionally, further comprising a spacer (333) sandwiched between the coupling parts (332c) of the corresponding flexures (332) in each stack, wherein the spacer is configured to prevent excessive flexure movement in a direction perpendicular to the first plane, and, optionally, wherein the spacer (333) comprises an end stop for constraining excessive flexure movement in the first plane.

9. An assembly according to any one of claims 4 to 7, wherein the flexures (832) do not overlap when viewed in a direction perpendicular to the first plane; and,
optionally, wherein the flexures (832) are evenly distributed around a centre of the support (821) and/or the movable part (823) when viewed in a direction perpendicular to the first plane.

10. An assembly according to any one of claims 4 to 9, wherein the flexure (332) comprises at least two portions (332a, 332d) arranged perpendicularly to each other comprising a first, planar portion (332a) configured to flex in the first plane and a second portion (332d) configured to resist deformation in the first plane; and,
optionally, wherein the first planar portion (332a) and the second portion (332d) are integrally formed from a single sheet of metal.

11. An assembly according to any one of claims 4 to 10, wherein the first flexure part (532a) comprises a void (532aa), or a thinned section, or a thickened section for modifying the stiffness of the first flexure part.

12. An assembly according to any one of claims 5 to 11, wherein the coupling part (332) comprises a wire capturing part (332c) for accommodating the shape memory alloy wire (327), the wire capturing part comprising a groove substantially extending in the first plane; and,
optionally, wherein the wire capture part (332c) comprises multiple radii when viewed in a direction perpendicular to the first plane, the wire capture part having the largest radii towards its peripheries.

13. An assembly according to any preceding claim, wherein:
the movable part (23) has a generally quadrilateral shape;
each of the plural units (27) comprises a said first length (27_{A}) and a said second length (27_{B}); and
each of the first and second lengths is arranged along an outer edge of the movable part and partially overlaps with one other one of the first and second lengths.

14. An assembly according to claim 13, wherein:
each of the first lengths (27_{A}) is connected via a first connector (31) to the support (21) and each of the second lengths (27_{B}) is connected via a second connector to the movable part (23),
the first and second connectors are located at a first pair of diagonally-opposite corners of the movable part, and
the first and second lengths are coupled to each other at a second, different pair of diagonally-opposite corners of the movable part; or,
when dependent on claim 9, wherein:
each of the first lengths (827_{A}) is connected via a first connector (831) to the support (821) and each of the second lengths (827_{B}) is connected via a second connector (833) to the movable part (823),
the first and second connectors are located at diagonally-opposite corners of the movable part, and
the first and second lengths are coupled to each other at different pair of diagonally-opposite corners of the movable part.

15. A method of producing the assembly according to any one of the claims 1 to 14, comprising:
providing a sub-assembly, the said sub-assembly comprising a sub-assembly frame (332e) connected to the plural couplings (332);
aligning and attaching the couplings to their predetermined positions on the support (321) and/or the moveable part (333);
severing the connection between the sub-assembly frame and the couplings;
removing the sub-assembly frame to form the assembly.

## Patentansprüche

1. Formgedächtnislegierungsaktuatoranordnung (2), umfassend:
eine Halterung (21), wobei eine erste Ebene in Bezug auf die Halterung definiert ist;
ein bewegliches Teil (23), das relativ zur Halterung entlang mindestens zwei verschiedenen, nicht parallelen Richtungen in der ersten Ebene beweglich ist;
mehrere Einheiten aus Formgedächtnislegierungsdraht (27), wobei jede Einheit zwischen dem beweglichen Teil und der Halterung verbunden ist, um angetrieben werden zu können, um eine Bewegung in den mindestens zwei Richtungen zu erzeugen, ohne ein Nettodrehmoment auf das bewegliche Teil in der ersten Ebene auszuüben;
wobei mindestens eine der Einheiten eine Reihe von zwei oder mehr Längen eines Formgedächtnislegierungsdrahtes zwischen dem beweglichen Teil und der Halterung umfasst, einschließlich einer ersten Länge (27_{A}) und einer zweiten Länge (27_{B}), wobei die erste und zweite Länge in einem Winkel ungleich Null relativ zueinander ausgerichtet sind und **dadurch gekennzeichnet sind, dass** die erste und zweite Länge über ein Kupplungsteil (32) miteinander gekoppelt sind, das so konfiguriert ist, dass es sich relativ zur Halterung (21) und relativ zum beweglichen Element (23) bewegt, so dass, wenn die Einheit angetrieben wird, die Kontraktion der ersten Länge eine Verschiebung der zweiten Länge bewirkt, die zusätzlich zu dem Beitrag, der durch die Kontraktion der zweiten Länge bereitgestellt wird, einen Beitrag zur Bewegung des beweglichen Teils bereitstellt.

2. Anordnung nach Anspruch 1, wobei die mehreren Einheiten aus Formgedächtnislegierungsdraht (27) zwei oder vier Einheiten aus Formgedächtnislegierungsdraht umfassen.

3. Anordnung nach Anspruch 1 oder Anspruch 2, wobei mindestens eines der Kupplungsteile (32) mit der Halterung (21) verbunden ist und/oder wobei mindestens eines der Kupplungsteile (32) mit dem beweglichen Teil (23) verbunden ist.

4. Anordnung nach einem der vorstehenden Ansprüche, wobei mindestens eines der Kupplungsteile (32) in einem Biegeelement (32a, 32b) enthalten oder daran befestigt ist, das sich in der ersten Ebene biegt, um die Kupplung zwischen der ersten und der zweiten Länge (27_{A}, 27_{B}) bereitzustellen.

5. Anordnung nach Anspruch 4, wobei das Biegeelement (32a, 32b) ein erstes Teil (32a), das unter Spannung steht, wenn sich das Biegeelement in der ersten Ebene biegt, und ein zweites Teil (32b) umfasst, das unter Druck steht, wenn sich das Biegeelement in der ersten Ebene biegt; und
wobei das zweite Teil des Biegeelements (32b) optional eine höhere Steifigkeit als das erste Teil des Biegeelements (32a) aufweist.

6. Anordnung nach Anspruch 5, wobei das erste und das zweite Teil des Biegeelements (32a, 32b) in derselben Ebene liegen; und/oder
wobei sich das zweite Biegeelementteil (32b) um das erste Biegeelementteil (32a) dreht, um eine Bewegung im Kupplungsteil zu bewirken.

7. Anordnung nach Anspruch 4, wobei das Biegeelement (332) ein Teil (332a) umfasst, das im Allgemeinen unter Druck steht, wenn sich das Biegeelement in der ersten Ebene biegt; und
wobei das Teil (332a) optional in der ersten Ebene eine höhere Nachgiebigkeit aufweist als in einer Richtung senkrecht zur ersten Ebene, und wobei das Teil (332a) optional einen Querschnitt aufweist, der in einer Richtung senkrecht zur ersten Ebene länglich ist.

8. Anordnung nach einem der Ansprüche 4 bis 6, umfassend mindestens einen Stapel aus zwei Biegeelementen (32(oberes), 32(unteres)), wobei die Biegeelemente im Stapel in einer Richtung senkrecht zur ersten Ebene voneinander beabstandet sind; und
optional ferner umfassend einen Abstandshalter (333), der zwischen den Kupplungsteilen (332c) der entsprechenden Biegeelemente (332) in jedem Stapel eingebettet ist, wobei der Abstandshalter so konfiguriert ist, dass er eine übermäßige Bewegung der Biegeelemente in einer Richtung senkrecht zur ersten Ebene verhindert, und wobei der Abstandshalter (333) optional einen Endanschlag umfasst, um eine übermäßige Bewegung der Biegeelemente in der ersten Ebene zu begrenzen.

9. Anordnung nach einem der Ansprüche 4 bis 7, wobei sich die Biegeelemente (832) in einer Richtung senkrecht zur ersten Ebene betrachtet nicht überlappen; und
wobei die Biegeelemente (832) optional gleichmäßig um eine Mitte der Halterung (821) und/oder des beweglichen Teils (823) verteilt sind, wenn sie in einer Richtung senkrecht zur ersten Ebene betrachtet werden.

10. Anordnung nach einem der Ansprüche 4 bis 9, wobei das Biegeelement (332) mindestens zwei senkrecht zueinander angeordnete Abschnitte (332a, 332d) umfasst, die einen ersten, ebenen Abschnitt (332a), der so konfiguriert ist, dass er sich in der ersten Ebene biegt, und einen zweiten Abschnitt (332d) umfassen, der so konfiguriert ist, dass er einer Verformung in der ersten Ebene widersteht; und
wobei der erste ebene Abschnitt (332a) und der zweite Abschnitt (332d) optional einstückig aus einem einzigen Metallblech gebildet sind.

11. Anordnung nach einem der Ansprüche 4 bis 10, wobei das erste Biegeelement (532a) einen Hohlraum (532aa) oder einen verdünnten Bereich oder einen verdickten Bereich zur Modifizierung der Steifigkeit des ersten Biegeelements aufweist.

12. Anordnung nach einem der Ansprüche 5 bis 11, wobei das Kupplungselement (332) ein Drahtfangteil (332c) zur Aufnahme des Formgedächtnislegierungsdrahts (327) umfasst, wobei das Drahtfangelement eine Nut aufweist, die sich im Wesentlichen in der ersten Ebene erstreckt; und
wobei das Drahtfangteil (332c) optional mehrere Radien umfasst, wenn es in einer Richtung senkrecht zur ersten Ebene betrachtet wird, wobei das Drahtfangteil die größten Radien zu seinen Rändern hin aufweist.

13. Anordnung nach einem der vorstehenden Ansprüche, wobei:
das bewegliche Teil (23) eine im Allgemeinen viereckige Form aufweist;
jede der mehreren Einheiten (27) eine erste Länge (27_{A}) und eine zweite Länge (27_{B}) umfasst; und
jede der ersten und zweiten Länge entlang einer Außenkante des beweglichen Teils angeordnet ist und sich teilweise mit einer anderen der ersten und zweiten Länge überlappt.

14. Anordnung nach Anspruch 13, wobei:
jede der ersten Längen (27_{A}) über einen ersten Verbinder (31) mit der Halterung (21) verbunden ist und jede der zweiten Längen (27_{B}) über einen zweiten Verbinder mit dem beweglichen Teil (23) verbunden ist,
der erste und der zweite Verbinder sich an einem ersten Paar diagonal gegenüberliegender Ecken des beweglichen Teils befinden, und
die erste und die zweite Länge an einem zweiten, unterschiedlichen Paar diagonal gegenüberliegender Ecken des beweglichen Teils miteinander gekoppelt sind; oder
bei Abhängigkeit von Anspruch 9, wobei:
jede der ersten Längen (827_{A}) über einen ersten Verbinder (831) mit der Halterung (821) verbunden ist und jede der zweiten Längen (827_{B}) über einen zweiten Verbinder (833) mit dem beweglichen Teil (823) verbunden ist,
der erste und der zweite Verbinder sich an diagonal gegenüberliegenden Ecken des beweglichen Teils befinden, und
die erste und die zweite Länge an einem anderen Paar diagonal gegenüberliegender Ecken des beweglichen Teils miteinander gekoppelt.

15. Verfahren zur Herstellung der Anordnung nach einem der Ansprüche 1 bis 14, umfassend:
Bereitstellen einer Unteranordnung, wobei die Unteranordnung einen Unteranordnungsrahmen (332e) umfasst, der mit den mehreren Kupplungen (332) verbunden ist;
Ausrichten und Befestigen der Kupplungen an ihren vorbestimmten Positionen an der Halterung (321) und/oder dem beweglichen Teil (333);
Trennen der Verbindung zwischen dem Unteranordnungsrahmen und den Kupplungen;
Entfernen des Unteranordnungsrahmen, um die Anordnung zu bilden.

## Revendications

1. Ensemble actionneur en alliage à mémoire de forme (2) comprenant :
un support (21), un premier plan étant défini par rapport audit support ;
une partie mobile (23) déplaçable par rapport au support dans au moins deux directions non parallèles dans le premier plan ;
plusieurs unités de fil en alliage à mémoire de forme (27), chaque unité étant raccordée entre la partie mobile et le support pour pouvoir être actionnée afin de produire un mouvement dans les au moins deux directions sans appliquer de couple net à la partie mobile dans le premier plan ;
au moins l'une desdites unités comprenant une série d'au moins deux longueurs de fil en alliage à mémoire de forme entre la partie mobile et le support, dont une première longueur (27_{A}) et une deuxième longueur (27_{B}), lesdites première et deuxième longueurs étant orientées selon un angle non nul l'une par rapport à l'autre ; **caractérisé en ce que** les première et deuxième longueurs sont couplées l'une à l'autre par le biais d'une pièce de couplage (32) conçue pour se déplacer par rapport au support (21) et par rapport à l'élément mobile (23) de façon que, lorsque l'unité est actionnée, une contraction de la première longueur provoque un déplacement de la deuxième longueur qui assure une contribution au déplacement de la partie mobile en plus de la contribution assurée par la contraction de la deuxième longueur.

2. Ensemble selon la revendication 1, dans lequel les plusieurs unités de fil en alliage à mémoire de forme (27) comprennent deux ou quatre unités de fil en alliage à mémoire de forme.

3. Ensemble selon la revendication 1 ou la revendication 2, dans lequel au moins une des pièces de couplage (32) est raccordée au support (21) et/ou au moins une des pièces de couplage (32) est raccordée à la partie mobile (23).

4. Ensemble selon l'une quelconque des revendications précédentes, dans lequel au moins une des pièces de couplage (32) est comprise dans une pièce de flexion (32a, 32b) ou rattachée à celle-ci, laquelle fléchit dans le premier plan pour fournir ledit couplage entre les première et deuxième longueurs (27_{A}, 27_{B})

5. Ensemble selon la revendication 4, dans lequel la pièce de flexion (32a, 32b) comprend une première partie (32a) en tension lorsque la pièce de flexion fléchit dans le premier plan et une deuxième partie (32b) en compression lorsque la pièce de flexion fléchit dans le premier plan ;
ladite deuxième partie de la pièce de flexion (32b) ayant facultativement une rigidité supérieure à celle de la première partie de la pièce de flexion (32a).

6. Ensemble selon la revendication 5, dans lequel les première et deuxième parties de la pièce de flexion (32a, 32b) se situent dans le même plan ; et/ou
dans lequel la deuxième partie de la pièce de flexion (32b) peut tourner autour de la première partie de la pièce de flexion (32a) pour effectuer un mouvement dans la pièce de couplage.

7. Ensemble selon la revendication 4, dans lequel la pièce de flexion (332) comprend une partie (332a) globalement en compression lorsque la pièce de flexion fléchit dans le premier plan ;
ladite partie (332a) ayant facultativement une élasticité supérieure dans le premier plan que dans une direction perpendiculaire au premier plan, et ladite partie (332a) ayant facultativement une section transversale allongée dans une direction perpendiculaire au premier plan.

8. Ensemble selon l'une quelconque des revendications 4 à 6, comprenant au moins un empilement de deux pièces de flexion (32(supérieure), 32(inférieure)), lesdites pièces de flexion de la pile étant espacées l'une de l'autre dans une direction perpendiculaire au premier plan ;
comprenant en outre un espaceur (333) enserré facultativement entre les pièces de couplage (332c) des pièces de flexion (332) correspondantes de chaque empilement, ledit espaceur étant conçu pour empêcher un mouvement de flexion excessif dans une direction perpendiculaire au premier plan, et ledit espaceur (333) comprenant facultativement une fin de course pour limiter un mouvement de flexion excessif sur le premier plan.

9. Ensemble selon l'une quelconque des revendications 4 à 7, dans lequel les pièces de flexion (832) ne se chevauchent pas, vues dans une direction perpendiculaire au premier plan ;
lesdites pièces de flexion (832) étant facultativement réparties uniformément autour du centre du support (821) et/ou de la partie mobile (823), vu dans une direction perpendiculaire au premier plan.

10. Ensemble selon l'une quelconque des revendications 4 à 9, dans lequel la pièce de flexion (332) comprend au moins deux portions (332a, 332d) agencées perpendiculairement l'une par rapport à l'autre et comprenant une première portion plane (332a) conçue pour fléchir dans le premier plan et une deuxième portion (332d) conçue pour résister à la déformation dans le premier plan ;
lesdites première portion plane (332a) et deuxième portion (332d) étant facultativement constituées d'un seul tenant dans une même feuille de métal.

11. Ensemble selon l'une quelconque des revendications 4 à 10, dans lequel la première partie de pièce de flexion (532a) comprend un vide (532aa), une section amincie ou une section épaissie permettant de modifier la rigidité de la première partie de la pièce de flexion.

12. Ensemble selon l'une quelconque des revendications 5 à 11, dans lequel la partie de couplage (332) comprend une partie de capture de fil (332c) destinée à recevoir le fil en alliage à mémoire de forme (327), la partie de capture de fil comprenant une rainure s'étendant sensiblement dans le premier plan ;
ladite partie de capture de fil (332c) comprenant facultativement de multiples rayons, vu dans une direction perpendiculaire au premier plan, la partie de capture de fil ayant les rayons les plus grands vers ses périphéries.

13. Ensemble selon l'une quelconque des revendications précédentes, dans lequel :
la partie mobile (23) a une forme globalement quadrilatérale,
chacune des plusieurs unités (27) comprend une dite première longueur (27_{A}) et une dite deuxième longueur (27_{B}), et
chacune des premières et deuxièmes longueurs est arrangée le long d'un bord extérieur de la partie mobile et chevauche partiellement une autre des premières et deuxièmes longueurs.

14. Ensemble selon la revendication 13, dans lequel :
chacune des premières longueurs (27_{A}) est raccordée au support (21) par le biais d'un premier connecteur (31) et chacune des deuxièmes longueurs (27_{B}) est raccordée à la partie mobile (23) par le biais d'un deuxième connecteur,
les premier et deuxième connecteurs sont situés sur une première paire de coins diagonalement opposés de la partie mobile, et
les premières et deuxièmes longueurs sont couplées entre elles sur une deuxième paire de coins diagonalement opposés de la partie mobile, différente de la première ; ou
lorsque l'ensemble dépend de la revendication 9 :
chacune des premières longueurs (827_{A}) est raccordée au support (821) par le biais d'un premier connecteur (831) et chacune des deuxièmes longueurs (827_{B}) est raccordée à la partie mobile (823) par le biais d'un deuxième connecteur (833),
les premier et deuxième connecteurs sont situés sur des coins diagonalement opposés de la partie mobile, et
les premières et deuxièmes longueurs sont couplées entre elles sur une paire différente de coins diagonalement opposés de la partie mobile.

15. Procédé de production de l'ensemble selon l'une quelconque des revendications 1 à 14, comprenant :
la fourniture d'un sous-ensemble, ledit sous-ensemble comprenant un cadre de sous-ensemble (332e) raccordé aux plusieurs couplages (332) ;
l'alignement et la fixation des couplages à leurs positions prédéterminées sur le support (321) et/ou la partie mobile (333) ;
la rupture du raccord entre le cadre de sous-ensemble et les couplages ;
le retrait du cadre de sous-ensemble pour former l'ensemble.
